# EUROPÄISCHE PATENTSCHRIFT

(11) **EP 0 657 260 B1**
(45) Veröffentlichungstag und Bekanntmachung des Hinweises auf die Patenterteilung: **10.02.1999**
(21) Anmeldenummer: 94119294.0
(22) Anmeldetag: 07.12.1994
(51) Int. Cl.: B28B 17/00

(54) **Verfahren zur Qualitätssicherung bzw. zur Qualitätsüberwachung von geformten Bauelementen**
Process for controlling and insuring the quality of moulded building elements
Procédé pour surveiller et assurer la qualité d'éléments de construction moulés

(30) Priorität: 08.12.1993 DE 4341894
(43) Veröffentlichungstag der Anmeldung: 14.06.1995
(73) Patentinhaber: Betonwerk Lintel GmbH & Co. KG, 33378 Rheda-Wiedenbrück (DE); PRO.EFF GmbH, 32429 Minden (DE)
(72) Erfinder: Pauleickhoff, Heinz, D-33398 Rietberg (DE); Steiling, Günther, D-33378 Rheda-Wiedenbrück (DE)
(74) Vertreter: Strauss, Hans-Jochen, Dipl.-Phys., Dr.

(56) Entgegenhaltungen:
- EP-A- 0 343 033
- DE-A- 3 628 757
- DE-A- 4 200 801
- FR-A- 2 591 934
- GB-A- 1 271 270
- GB-A- 2 179 588
- US-A- 3 109 927
- US-A- 4 095 925
- PATENT ABSTRACTS OF JAPAN vol. 15, no. 55 (P-1164) 8. Februar 1991 & JP-A-02 285 235 (CHICHIBU CEMENT CO LTD) 22. November 1990
- ZKG INTERNATIONAL, Bd.43, Nr.6, Juni 1990, WIESBADEN , DE Seiten 306 - 309, XP140637 H.-P. HIPPLER 'BERÜHRUNGSLOSE DIMENSIONSMESSUNG BEI DER GIPSPLATTENHERSTELLUNG DURCH LASER-MESSTECHNIK'
- DATABASE WPI Week 9308, Derwent Publications Ltd., London, GB; AN 93-060885 & JP-A-05 004 263 (MITSUBISHI HEAVY IND CO LTD) 14. Januar 1993
- PATENT ABSTRACTS OF JAPAN vol. 14, no. 223 (P-1046) 11. Mai 1990 & JP-A-02 051 032 (TOYO INK MFG CO LTD) 21. Februar 1990
- PATENT ABSTRACTS OF JAPAN vol. 15, no. 344 (P-1245) 30. August 1991 & JP-A-03 130 605 (SUMITOMO HEAVY IND LTD) 4. Juni 1991

## Beschreibung

Die Erfindung betrifft ein Verfahren zur Qualitätssicherung bzw. zur Qualitätsüberwachung von geformten Bauelementen wie Formsteinen, Betonsteinen, Pflastersteinen, Ziegel, Platten o.dgl., die in einer Formvorrichtung kontinuierlich hergestellt werden und chargenweise mittels einer Fördereinrichtung zum Abbinden in ein Lager abgefördert werden, wobei der Formvorrichtung direkt eine Meßanordnung nachgeschaltet ist, die an in einer Charge befindlichen einzelnen Formlingen Messungen durchführt, wobei die Formlinge, die über oder unter einem vorgegebenen Sollwert liegen, unmittelbar nach Durchlaufen der Meßanordnung aussortiert und wieder der Formvorrichtung zugeführt werden, und die Meßanordnung zur Regelung der Formvorrichtung eingesetzt werden kann.

Bei der Herstellung von geformten Bauelementen wird beispielsweise ein Gemisch von Sand und/oder Kies, Zement und Wasser oder anderen Grundstoffmaterialien mit Bindemitteln angemischt, wobei dieses Gemisch dann einer Rüttel- und Pressvorrichtung zum Formen des Formlings zugeführt wird. Die Mischung wird in eine Form gefüllt und dann zunächst zur Verdichtung in der Form gerüttelt. Danach wird die Mischung mit einem Press-Stempel in der Form nachverpresst, so daß die Presslinge nach dem Abheben der Form auf einer Palette zurückbleiben. Diese Presslinge werden dann auf der Palette mittels einer Fördereinrichtung in ein Lager gefahren, wo sie dann zum Abbinden oder Austrocknen eine bestimmte Zeit gelagert werden, bevor sie dann an ihren Verwendungsort transportiert werden, um sie als Bauelemente zu verwenden.

Bei der Herstellung derartiger Formlinge nach diesem bekannten Verfahren kommt es oft vor, daß die Einzelchargen, die aus der Formvorrichtung hinsichtlich der Presslingshöhe, der Farbe und der Formkontur der Einzelformlinge, gravierende Unterschiede aufweisen. Diese Unterschiede stellen insbesondere dann ein Problem dar, wenn derartige Presslinge oder Formlinge in der Fläche verlegt werden. Dabei kann es dann oft vorkommen, daß einzelne oder auch ganze Formlingschargen Höhenabweichungen bis zu plus/minus 5 mm und mehr aufweisen. Eine derartige Höhenabweichung ist in der Fläche sofort erkennbar. Dieser geringe Höhenunterschied kann beispielsweise mit einem Rüttler oft nicht mehr ausgeglichen werden, da der Untergrund, auf dem ein derartiges Pflaster verlegt wird, bereits durch Maschinen derart verdichtet ist, daß ein Ausgleichsrütteln nicht mehr möglich ist.

Zudem hat es sich als äusserst störend herausgestellt, daß die Einzelchargen nach erfolgter Abbindezeit unterschiedliche Farbausstrahlungen aufweisen, die in einem verlegten Pflasterverband in der Fläche ebenfalls sehr störend wirken können. So kann es vorkommen, daß Flächen mit unterschiedlichen Farbtönen verlegt werden, die für den Betrachter als sehr störend empfunden werden, wobei es dann unumgänglich ist, diese Flächen neu zu verlegen.

Dabei hängt die Farbgebung eines derartigen Formlings neben den Grundstoffzutaten auch von der Pressung bzw. seiner Verdichtung ab, da bei einer höheren Verdichtung bzw. Pressung des Formlings das Porenvolumen in dem Körper geringer ausfällt und der Formling nach seiner Abbinde- bzw. Austrocknungszeit wesentlich heller ausfällt, als ein nicht so verdichteter Formling, der aufgrund seiner geringeren Verdichtung bzw. Pressung ein wesentlich grösseres Porenvolumen aufweist und dadurch von seiner Farberscheinung her nach seiner Abbindezeit wesentlich dunkler erscheint. Zudem gestaltet sich das maschinelle Verlegen von derart hergestellten Formlingen dann äusserst problematisch, wenn die Formlinge unterschiedliche Aussenkonturen aufweisen und somit ein flächenmässiges Greifen von der Palette nicht möglich ist. Ein Reibschluss der im Verbund liegenden Formlinge wird dann nicht erzielt, da bereits geringe Toleranzunterschiede dazu führen, daß die Formlinge aus dem Greifer fallen.

Aus dem Stand der Technik sind gemäß der EP-A-0 343 033 und der JP-A-02-285235 Vorrichtungen bekannt. Das erste Dokument beschreibt eine Meßanordnung, die einer Formvorrichtung nachgeschaltet ist, um insbesondere hier Formsteine, Betonsteine, Pflastersteine, Ziegel, Platten o.dgl. zu vermessen. Dabei werden die in einer Charge befindlichen einzelnen Formlinge in der Weise vermessen, daß oberhalb der Formlinge zwei Sonden angeordnet sind, die den Abstand Auflage Formling einerseits und Oberfläche Formling andererseits messen. Eine entsprechende Meßanordnung liegt auch dem zweiten Dokument zugrunde, wo der Formling ebenfalls hinsichtlich seiner Form elektronisch vermessen wird. Ein wesentlicher Nachteil bei den aus dem Stand der Technik vorbekannten Vorrichtungen besteht darin, daß sie ausschließlich nur Messungen zur äusseren Formbestimmung eines Formlings durchführen. Hierbei wird nach den aus dem Stand der Technik bekannten Vorrichtungen die Höhenmessung als wesentliches Qualitätsmerkmal angesehen. Somit wird lediglich erreicht, daß die einzelnen in der Charge liegenden Formlinge eine gleiche Höhe aufweisen. Diese Überwachung berücksichtigt somit nur ein die äussere Form des Formlings betreffendes Qualitätsmerkmal.

Es ist daher die Aufgabe der Erfindung, ein Verfahren zur Qualitätssicherung bzw. zur Qualitätsüberwachung von geformten Bauelementen dahingehend weiterzubilden, welches einerseits die Qualität bzw. die Überwachung der Produkte bei kontinuierlichem Betrieb sicherstellt und andererseits sicherstellt, daß die Produkte nach ihrer Abbindezeit insbesondere hinsichtlich ihres Aussehens einer bestimmten Qualitätsnorm entsprechen und Reklamationen ausgeschlossen werden.

Die Erfindung löst nach dem Verfahren die Aufgabe dadurch, daß mit der Meßanordnung zusätzlich zur Höhenmessung eine Farbmessung an einzelnen in einer Charge befindlichen Formlingen durchführt wird, wobei die Farbmessung einer hochauflösenden Zeilenkamera die Oberfläche der einzelnen Formlinge einer Charge nach ihren Farbwerten und ihrer Helligkeit mißt.

Aufgrund dieses Verfahrens unter Zuhilfenahme einer direkt nach der Formvorrichtung nachgeschalteten Meßanordnung wird erreicht, daß bereits eine Qualitätsprüfung direkt nach der Herstellung des Formlings erfolgt. Bereits nach dem Verlassen des Formlings aus der Vorrichtung ist es besonders vorteilhaft, daß gerade an dieser Stelle schon der Formling vermessen wird, um direkt nach dem Austritt aus der Formvorrichtung beurteilen zu können, ob die Charge den Qualitätsnormen entspricht, wobei die Messanordnung auch zur Steuerung und Regelung der Einzelkomponenten der Formvorrichtung genutzt werden kann. Dies betrifft in erster Linie die Formlingshöhe, da insbesondere die Höhenmessung einen wesentlichen Schluß auf die Verdichtung des geformten Materials zuläßt, und somit ein entscheidendes Merkmal für die Qualität ist. Dabei ist insbesondere die Höhenmessung, welche eine der durchgeführten Messungen an dem Formling ist, auch ein Indiz für die spätere Farberscheinung ist, da insbesondere bei hoher Verdichtung bzw. Pressung des Formlings das Porenvolumen gering ausfällt, was nach dem Abbindeprozess zu einer helleren Farbe des Produktes führt. Mit der Meßanordnung kann nun bereits schon in einem frühen Stadium der Produktion festgestellt werden, ob der Pressling eine bestimmte spätere Qualität erreicht. Wird bereits schon in diesem frühen Stadium eine Minderqualität mit der Meßanordnung festgestellt, so besteht insbesondere in diesem Stadium noch die Möglichkeit die noch nicht abgebundene Charge wieder der Mischung zuzusetzen, um sie der Formvorrichtung wieder zuzuführen.

Weiterhin kann hinsichtlich der Bruchfestigkeit eines nach dem Verfahren hergestellten Formlings eine Aussage dahingehend getroffen werden, daß Formlinge, die eine geringere Höhe haben, aufgrund des höheren Pressdrucks somit eine geringere Porösität aufweisen, und diese so gebildeten oder geformten Produkte von der Bruchfestigkeit her von Formlingen abweicht, deren Porösität größer ist. Demnach kann mit dieser Meßanordnung auch eine Aussage darüber getroffen werden, welche Bruchfestigkeiten die einzelnen Chargen aufweisen, so daß bei der Überwachung der Qualität die Bruchfestigkeit eines derartigen Formlings mit überwacht werden kann.

Nach einer vorteilhaften Weiterbildung der Erfindung erfolgt die Höhenmessung der einzelnen Formlinge mit wenigstens zwei installierten Laserdioden und einer hochauflösenden Zeilenkamera. Dabei wird einmal die Höhe der Palette, auf der sich die Charge der Formlinge befindet, mit einer der beiden Laser gemessen, wobei mit der zweiten Laserdiode die Höhe der einzelnen Formsteine auf der Palette bestimmt werden. Die Differenz der Höhenmessungen von Palette und Formling ergibt dann die exakte Höhe des Produktes. Bei der Verwendung von Holzpaletten, kann es daher auftreten, daß insbesondere die Holzpaletten unterschiedliche Dicken, aufgrund des Abriebverschleißes aufweisen. Es ist daher erfoderlich zur Bestimmung des Bezugspunktes, um exakte Höhenmessungen durchführen zu können, daß die Höhe der Palette mitbestimmt wird. Dazu wird mittels des ersten Lasers diese Höhe der Palette gemessen, und mit einem zweiten Laser die Höhe des Formlings bestimmt. Aufgrund der sich ergebenden unterschiedlichen zwei Höhenmessungen, kann nun auf einfache Weise die exakte Höhe des Produktes selbst errechnet werden.

In zweckmäßiger Weiterbildung des Verfahrens können zu den Laserdioden weitere Laser installiert werden, die entweder zur Höhenmessung oder zur Überprüfung der Formkonturen des Formlings eingesetzt werden. Auf diese Weise wird ermöglicht, daß mittels weiterer Laseranordnungen neben der erweiterten Höhenmessung auch die Konturen des Formlings miterfaßt werden können, wie beispielsweise gewinkelte Seitenflächen oder in der Fläche vorhandene Einformungen. In Verbindung mit der Höhenmessung kann auch eine Gewichtsbestimmung der Charge erfolgen, um hier eine zusätzliche für die Qualität bestimmte Beurteilung zu erhalten. Hierzu werden in der Fördereinrichtung Druckmessdosen angeordnet, die zunächst das Leergewicht der Palette bestimmen, wobei nach Durchlaufen durch die Formvorrichtung die entsprechende Palette mit den aufliegenden Formlingen gewichtsmäßig erfaßt wird. Aus der Differenz und den anzahlmäßigen Formlingen läßt sich dann das Gewicht des Einzelformlings bestimmen, welches ebenfalls durch die Messanordnung erfolgt.

In Weiterbildung der Erfindung wird mit der Messanordnung zusätzlich zur Höhenmessung eine Farbmessung an einzelnen in einer Charge befindlichen Formlingen durchgeführt. Die Farbmessung erfolgt mit der hochauflösenden Zeilenkamera, die die Oberfläche der einzelnen Formlinge einer Charge nach ihrem Farbwert und ihrer Helligkeit erkennt. Dazu spaltet die hochauflösende Zeilenkamere das von der Oberfläche der einzelnen Formlinge stammende Oberflächensignal in die Signale R (rot), G (grün) und B (blau) zur Bestimmung des Farbwertes und in Signal Y (Luminanz) zur Bestimmung des Helligkeitswertes auf.

Parallel zu der Höhen- und Farbmessung kann die hochauflösende Zeilenkamera zur Erkennung der Oberflächen der in einer Charge befindlichen Formlinge eingesetzt werden. Die Erkennung erfolgt dabei mittels eines Scheinwerfers hoher Lichtintensität, der auf die Charge gerichtet ist. Die Kamara nimmt dabei exakt die hellen und die dunkleren Bereiche auf, so daß daraus auf die sich ergebenden Außenkonturen der Oberfläche des Formlings geschlossen werden kann, wobei dessen genormte Oberflächenerstreckung als Sollwert abgespeichert ist und zum Vergleich mit der frisch geformten Charge dient. Zu den Außenkonturen, die insbesondere für die maschinelle Verlegung wichtig sind, damit ein Greifen einer Charge von der Palette der unter Reibschluß stehenden Formlingen ermöglicht wird, kann zu dem die Oberflächenstruktur des Einzelformlings mit der Kamera erkannt und ausgewertet werden.

Sämtliche einzelnen gemessenen Werte einer Charge, wie Höhenmessung der Palette, der einzelnen Formlinge, sowie die Farbwerte und die Helligkeitswerte und Oberflächenwerte werden einem Computer zugeführt und diese Momentanwerte werden dann mit vorgegebenen im Rechner abgespeicherten Sollwerten verglichen. Die Farbsollwerte werden durch Farbberechnung von typischen Farbeigenschaften eines Produktes ermittelt und mit vorher gelernten Sollmustern verglichen. Entsprechend den Toleranzen werden dann diese Sollmuster zur Anzeige auf dem nachgeschalteten "PC" gebracht. Wird eine Überschreitung der im Computer abgespeicherten für die Qualität einer Charge bestimmten Sollwerte festgestellt, so schaltet die Vorrichtung sofort ab, um die noch nicht abgebundene Charge von der Fördereinrichtung zu entfernen, um sie wieder der Formvorrichtung zuzuführen.

Nach einer vorteilhaften Weiterbildung des Verfahrens werden mit der Meßanordnung die Meßwerte quer zur Förderrichtung aufgenommen, wobei jeweils die in einer Charge hintereinander liegenden Formlinge beim Durchlaufen der Meßanordnung gemessen werden. Auf diese Weise tasten die Laserstrahlen einzeln hintereinander liegende Formlinge ab, so daß eine für die Qualitätssicherung aussagekräftige Messung durchgeführt werden kann. Dabei wird von den einzelnen Meßwerten einer Charge ein Mittelwert gebildet, der mit dem vorgegebenen abgespeicherten Mittelwert eines Sollwertes verglichen wird. Entsprechend den Toleranzen bewertet das Computerprogramm diese unterschiedlichen Werte und bringt diese auf dem Bildschirm des nachgeschalteten "PC's" zur Anzeige. Dabei hat es sich als sehr vereinfachend ergeben, daß beispielsweise verschiedenen Artikelnummern gleich entsprechender Sollkennwerte für Farbe, Höhe und Fläche mit abgespeichert werden, so daß bei Eingabe der Artikelnummer bereits diese Werte mit abgespeichert werden. Das Meßprogramm für die Kamera wird von dem "PC" gestartet, und mit den aktuellen Parametern der zu produzierenden Formsteine versehen. Bei der Festlegung des Sollwertes ist es dann von Vorteil, wenn Toleranzgrenzen von plus minus 5% zugelassen werden.

Hinsichtlich der Durchführung des Verfahrens zur Qualitätssicherung bzw. zur Qualitätsüberwachung von geformten Bauelementen wie Formsteinen, Betonsteinen, Pflastersteinen, Ziegeln, Platten oder dgl., geht die Erfindung von einer Vorrichtung aus, bei der die Produkte in einer Formvorrichtung mittels einer Form kontinuierlich herstellbar sind und chargenweise mittels einer Fördereinrichtung zum Abbinden in ein Lager abgefördert werden. Es ist dabei nach der Erfindung von besonderem Vorteil, daß unmittelbar hinter der Formvorrichtung eine Meßanordnung über der Fördereinrichtung angeordnet ist, die an in einer Charge befindlichen einzelnen Formlingen Messungen durchführt. Aufgrund einer direkt hinter der Formvorrichtung vorgesehenen Meßanordnung wird erreicht, daß insbesondere fehlerhafte Chargen unmittelbar nach dem Austritt aussortiert werden können. Zu dem bringt es den Vorteil mit sich, daß diese noch nicht abgebundenen Chargen wieder der Mischung zugesetzt werden können und somit ein Verlust an Rohmaterialien gering ist. Die direkte Aussortierung nach dem Formen unterbindet auch, das fehlerhafte Produkte nicht ausgeliefert werden und somit insbesondere spätere Reklamationen nicht mehr auftreten, die hinsichtlich ihrer Behebung als sehr kostenaufwendig anzusehen sind. Die Meßanordnung kann dabei auch zur Steuerung bzw. zur Regelung der Vorrichtung dienen.

In Weiterbildung der Vorrichtung besteht die Meßanordnung aus mindestens zwei Laserdioden und einer hochauflösenden Zeilenkamera, die an einem Gestell über der Fördereinrichtung angeordnet ist. Die Zeilenkamera erfaßt dabei sohwohl die Höhe, die Farbe und die Oberfläche der geformten Produkte. Dabei sind die Zeilenkamera und die Laserdioden an diesem Gestell horizontal in unterschiedliche Postitionen verschiebbar angeordnet. Auf diese Weise lassen sich die einzelnen Meßgeber oder -fühler auf die unterschiedlichen Produkte leicht und sicher einstellen. Zur Feinjustierung der unterschiedlichen Positionierungen sind die Laserdioden und die Zeilenkamera auf Schliten angeordnet, die mittels eines Spindeltriebes an einem horizontal verlaufenden Balken des Gestells verschoben werden können. Damit die Meßergebnisse im laufenden Betrieb aufgenommen werden können, sind die Laserdioden und die Zeilenkamera in einer Ebene quer zur Förderrichtung angeordnet, wobei die einzelnen Laserdioden verschwenkbar quer zur Förderrichtung angeordnet sind, so daß die Laserstrahlen unter einem Winkel auf die zu messenden Gegenstände auf der Fördereinrichtung auftreffen. Auf diese Weise können im Scan-Verfahren während des Produktionsablaufes die einzelnen Meßwerte leicht und sicher ermittelt werden.

Von den beiden Laserstrahlen ist ein Laserstrahl auf die Palette und der zweite Laserstrahl auf die aufliegenden Formlinge gerichtet. Dabei erfolgt mit der Zeilenkamera sowohl die Höhenmessung als auch die Farbmessung. Um auf der Fördereinrichtung auch höhere Gegenstände vermessen zu können, sind zur Höhenverstellung des Gestells die vertikal verlaufenden Stützen des Gestells in unterschiedliche Positionen teleskopierbar. In vorteilhafter Weise ist die Meßanordnung dabei mit einem Computer zur Auswertung der momentan durch die Meßanordnung aufgenommenen Meßwerte verbunden.

Das erfindungsgemäße Verfahren sowie die zur Durchführung des Verfahrens vorgesehene Vorrichtung wird nachstehend anhand eines Ausführungsbeispieles mit Bezug auf die Zeichnungen näher erläutert. In den Zeichnungen zeigen:
- Fig. 01:: Eine schematische Darstellung in der Draufsicht auf die nach dem Verfahren mit einer Meßanordnung ausgerüsteten Herstellungsstraße für Formsteine, Betonsteine, Pflastersteine o.dgl.;
- Fig. 02:: Eine Ansicht gemäß der Schnittlinie II - II gemäß der Fig. 1;
- Fig. 03:: Eine Darstellung eines Bildschirmausschnittes gemäß der Erfindung.

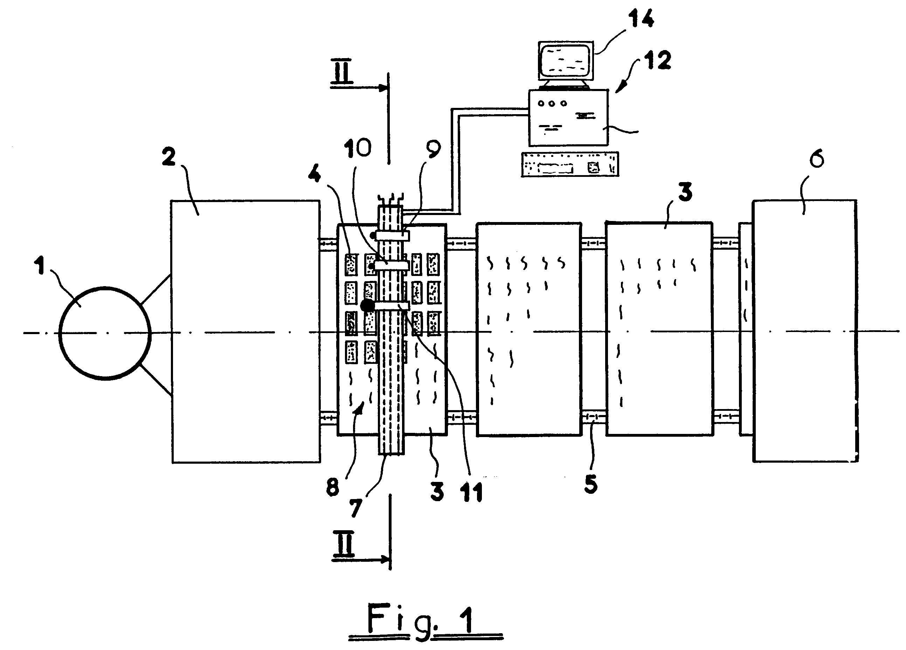

Nach dem erfindungsgemäßen Verfahren zur Qualitätssicherung bzw. zur Qualitätsüberwachung von geformten Bauelementen, wie Formsteinen, Betonsteinen, Pflastersteinen, Ziegeln, Platten o.dgl., setzt sich das Verfahren zur Herstellung aus folgenden Betriebseinheiten gemäß der Figur 1 zusammen, dabei wird zunächst in einem Mischer 1 eine Mischung aus Sand und/oder Kies, Zement und Wasser und eventuell unter Zugabe noch Additiven hergestellt. Diese hergestellte Mischung wird dann einer Formvorrichtung 2 zugeführt, in der dann mittels einer nicht näher dargestellten Form auf Paletten 3 Formlinge 4 kontinuierlich hergestellt werden. Mittels einer Fördereinrichtung 5 werden dann die chargenweise hergestellten Formlinge 4 in ein Lager 6 befördert, wo die einzelnen Formlinge 4 auf der Palette 3 zum Abbinden gelagert werden. Dabei wird nach dem erfindungsgemäßen Verfahren der Formvorrichtung 2 direkt eine Meßanordnung 7 nachgeschaltet, mit der sowohl Höhenmessungen an in einer Charge 8 befindlichen einzelnen Formlingen 4 durchgeführt werden, als auch eine Farbmessung und eine Oberflächenmessung an einzelnen in einer Charge 8 befindlichen Formlingen 4 vollzogen werden. Dabei werden die noch nicht abgebundenen Chargen 8, welche über oder unter einem vorgegebenen Sollwert der Meßanordnung 7 liegen, unmittelbar nach Durchlaufen der Meßanordnung 7 aus dem Fluß der Fördereinrichtung 5 herausgenommen, und die noch nicht abgebundenen Formlinge 4 wieder der Mischeinrichtung 1 zugeführt.

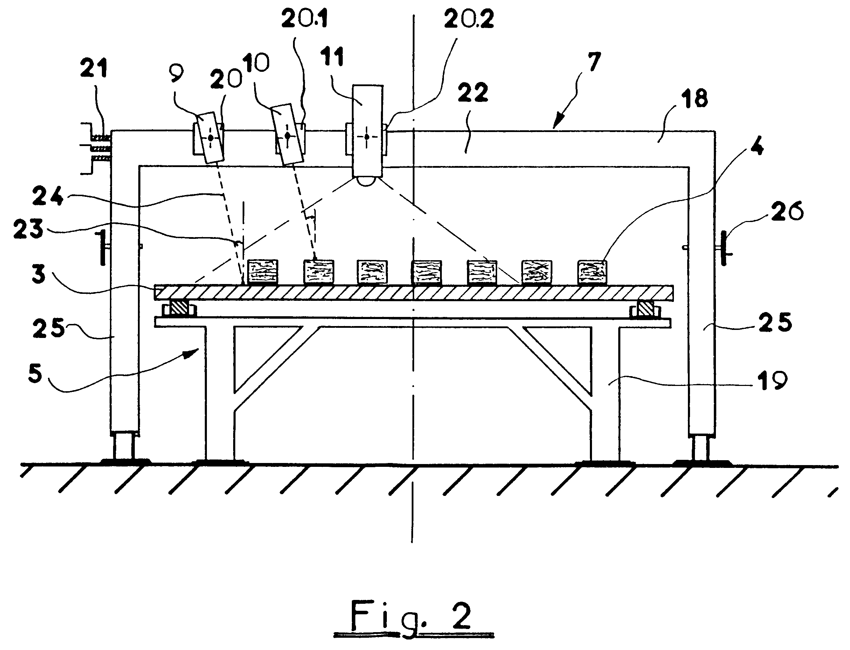

Die Höhenmessung, dargestellt in der Figur 2, der einzelnen Formlinge 4 erfolgt mittels wenigstens zwei installierter Laserdioden 9 und 10 und einer hochauflösenden Zeilenkamera 11. Hinsichtlich der Höhenmessung wird mit einer der Laserdioden 9 die Höhe der Palette 3 bestimmt, auf der sich die Charge 8 der Formlinge 4 befindet. Mit der zweiten Laserdiode 9 wird die Höhe der einzelnen Formlinge 4 auf der Palette 3 gemessen. Die sich aus den Messungen ergebende Differenz von Palette 3 und Formling 4 ergibt dann die exakte Höhe des Formlings 4. Bei der Installierung weiterer nicht näher dargestellter Laser ist es möglich, diese zur Überprüfung der Kontur des Formlings 4 einzusetzen, so beispielsweise zur qualitativen Überwachung der Seitenflächen eines Formlings 4.

Weiterhin wird zu der Höhenmessung mit der Zeilenkamera 11 die Farbmessung an den Oberflächen der einzelnen Formlinge 4 einer Charge 8 durchgeführt. Die Zeilenkamera 11 mißt dabei insbesondere die Oberflächen nach ihrem Farbwert und ihrer Helligkeit. Dazu spaltet die hochauflösende Zeilenkamere 11 das von der Oberfläche der einzelnen Formsteine 4 stammende Oberflächensignal in die Signale R (rot), G (grün) und B (blau) zur Bestimmung des Farbwertes und in ein Signal Y (Luminanz) zur Bestimmung des Helligkeitswertes auf. Diese gemessenen Werte einer jeden Charge 8, wie beispielsweise Höhenmessung der Palette 3, Höhenmessung der einzelnen Formlinge 4, sowie die Farbwerte und die Helligkeitswerte werden dann einem Computer 12 zugeführt, die dann mit vorgegebenen abgespeicherten Sollwerten mittels des Rechners 13 verglichen werden.

Parallel zu der Höhen- und Farbmessung kann die hochauflösende Zeilenkamera 11 zur Erkennung der Oberflächen der in einer Charge 8 befindlichen Formlinge 4 eingesetzt werden. Die Erkennung erfolgt dabei mittels eines nicht näher dargestellten Scheinwerfers hoher Lichtintensität, der auf die Charge 8 gerichtet ist. Die Kamara 11 nimmt dabei exakt die hellen und die dunkleren Bereiche auf, so daß daraus auf die sich ergebenden Außenkonturen der Oberfläche des Formlings 4 geschlossen werden kann, wobei dessen genormte Oberflächenerstreckung als Sollwert abgespeichert ist und zum Vergleich mit der frisch geformten Charge 8 dient. Zu den Außenkonturen, die insbesondere für die maschinelle Verlegung wichtig sind, damit ein Greifen einer Charge 8 von der Palette der unter Reibschluß stehenden abgebundenen Formlingen 8 ermöglicht wird, kann zudem die Oberflächenstrucktur des Einzelformlings 4 mit der Kamera 11 erkannt und ausgewertet werden.

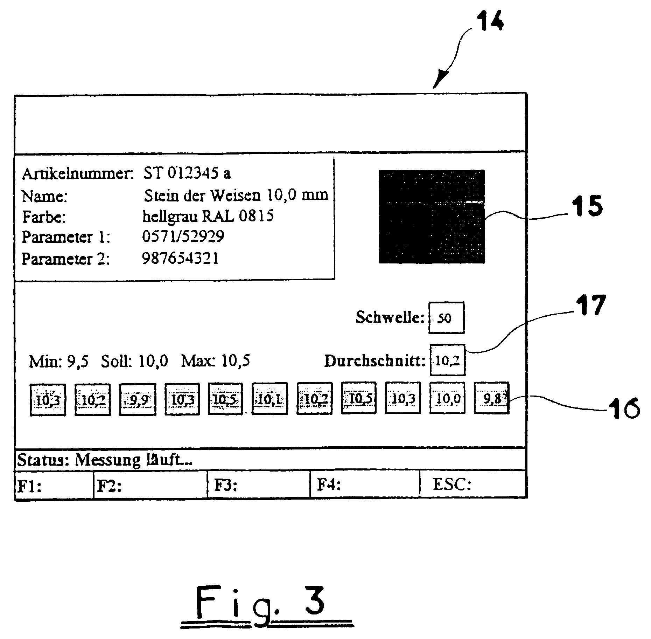

Die auf einem Bildschirm 14 dargestellte Oberfläche gestaltet sich entsprechend, wie es in der Figur 3 gezeigt wird. In dem linken oberen Feld erscheint die Artikelnummer, der Name, die Farbe sowie zusätzliche Parameter. Rechts davon befindet sich ein Kennfeld 15, in dem Farben ähnlich wie bei einer Ampel sichtbar werden, so daß eine Charge 8, die die Meßanordnung 7 durchlaufen hat und mit der Farbe grün bewertet wird, nicht aussortiert wird. Entsprechend kann die Farbe gelb und rot die Vorrichtung zum Stillstand veranlassen, damit die entsprechende Charge 8 entfernt werden kann. Am unteren Bildrand sind 11 Kennflächen 16 dargestellt, in denen jeweils die hintereinander liegenden Formlinge 4 einer Charge 8 mit den gemessenen Höhen sichtbar gemacht werden. In einem einzelnen Kennfeld 17 darüber wird der Durchschnittswert angegeben. Liegt dieser Durchschnittswert in einem Toleranzbereich der um 5% vom Sollwert nicht abweicht, wie hier beispielsweise bei Vorgabe des Sollwertes 10 mit einer Abweichung von plus minus 0,5, so wird die Anlage von dem Rechner nicht stillgesetzt, wenn wie in dem Kennfeld 17 ein Durchschnittswert von 10,2 vorliegt.

Mit der Meßanordnung 7 werden die einzelnen Meßwerte, wie sie auf der Bildschirmfläche 14 erscheinen, quer zur Förderrichtung aufgenommen, wobei jeweils die in einer Charge 8 hintereinander liegenden Formlinge 4 entsprechend der Kennflächen 16 beim Durchlaufen der Meßanordnung 7 gemessen werden.

Bei der Vorrichtung zur Durchführung des erfindungsgemäßen Verfahrens zur Qualitätssicherung bzw. zur Qualitätsüberwachung besteht die Meßanordnung 7 aus wenigstens zwei Laserdioden 9 und 10 und einer hochauflösenden Zeilenkamera 11, die an einem Gestell 18 über einer Fördereinrichtung 19, wie dies insbesondere in der Figur 2 dargestellt ist, angeordnet ist. Dabei befindet sich die Meßanordnung 7, wie bereits oben schon erwähnt, direkt hinter der Formvorrichtung 2.

Die Zeilenkamera 11 und die Laserdioden 9 und 10 sind an dem Gestell 18 horizontal in unterschiedliche Positionen verschiebbar angeordnet. Um eine Feinjustierung der unterschiedlichen Positionierungen der Laserdioden 9 und 10 sowie der Zeilenkamera 11 vorzunehmen, befinden sich die Meßorgane an Schlitten 20, 20.1 und 20.2, die sich mittels jeweils eines gesonderten Spindeltriebs 21 an dem horizontal verlaufenden Balken 22 des Gestelles 18 verschieben lassen. Die Laserdioden 9 und 10 sowie die Zeilenkamera 11 sind an den einzelnen Schlitten 20, 20.1 und 20.2 schwenkbar gelagert, damit die einzelnen Meßorgane auf unterschiedliche Größen von Formlingen 4 abgestimmt werden können.

Dabei sind die Laserdioden 9 und 10 und die Zeilenkamera 11 in einer Ebene quer zur Förderrichtung angeordnet. Die schwenkbaren Laserdioden 9 und 10 sowie die Zeilenkamera 11 können an dem jeweiliegen Schlitten 20, 20.1 und 20.2 eingestellt werden, so daß die Laserstrahlen 24 unter einem Winkel 23 auf die zu messenden Gegenstände, wie auf die Palette 3 und den jeweiligen Formling 4 auftreffen. Die sich auf den Gegenständen, Palette 3 und Formling 4, ergebenden Laserlichtpunkte werden von der Zeilenkamera 11 quasi eingescant, so daß Momentanwerte errechnet werden können. Dabei erfolgt mit der Zeilenkamera 11 sowohl die Höhenmessung als auch die Farbmessung, wobei die Werte, wie bereits oben schon näher beschrieben, auf einem Bildschirm sichtbar gemacht werden.

Um das Gestell 18 auch in seiner Höhe zu verstellen, sind an den vertikal verlaufenden Stützen 25 Verstelleinrichtungen 26 angebracht, so daß das Gestell 18 in unterschiedliche Positionen teleskopiert werden kann. Mit der Meßanordnung 7 ist, wie bereits oben schon näher ausgeführt, ein Computer 12 zur Auswertung der momentan durch die Meßanordnung 7 aufgenommenen Meßwerte verbunden.

## Patentansprüche

1. Verfahren zur Qualitätssicherung bzw. zur Qualitätsüberwachung von geformten Bauelementen wie Formsteinen, Betonsteinen, Pflastersteinen, Ziegel, Platten oder dgl., die in einer Formvorrichtung (2) kontinuierlich hergestellt werden, und chargenweise mittels einer Fördereinrichtung (5) Abbinden in ein Lager abgefördert werden, wobei der Formvorrichtung direkt eine Meßanordnung (7) nachgeschaltet ist die an in einer Charge befindlichen einzelnen Formlingen (4) Messungen durchführt, wobei die Formlinge (4), die über oder unter einem vorgegebenen Sollwert liegen, unmittelbar nach Durchlaufen der Meßanordnung aussortiert und wieder der Formvorrichtung (2) zugeführt werden, und die Meßanordnung (7) zur Regelung der Formvorrichtung (2) eingesetzt werden kann, **dadurch gekennzeichnet**, daß mit der Meßanordnung (7) zusätzlich zur Höhenmessung eine Farbmessung an einzelnen in einer Charge (8) befindlichen Formlingen (4) durchgeführt wird, wobei zur Farbmessung eine hochauflösende Zeilenkamera (11) die Oberflächen der einzelnen Formlinge (4) einer Charge (8) nach ihrem Farbwert und ihrer Helligkeit mißt.

2. Verfahren nach Anspruch 1, **dadurch gekennzeichnet**, daß mit der Meßanordnung (7) die Höhenmessung der Formlinge (4) mit wenigstens zwei installierten Laserdioden (9) und (10) in Verbindung mit einer hochauflösenden Zeilenkamera (11) erfolgt.

3. Verfahren nach den Ansprüchen 1 und 2 **dadurch gekennzeichnet**, daß einmal die Höhe der Palette (3), auf der sich die Charge (8) befindet, mit der Laserdiode (9) gemessen wird, und mit der Laserdiode (10) die Höhen der einzelnen Formlinge (4) bestimmt werden, so daß mit der sich ergebenden Differenz der Höhenmessungen von Palette (3) und Formling (4) die Höhe des Formlings bestimmt wird.

4. Verfahren nach den Ansprüchen 2 und 3, **dadurch gekennzeichnet**, daß zu den Laserdioden (9) und (10) weitere Laser installiert werden können, die entweder zur Höhenmessung oder zur Überprüfung der Formkonturen des Formlings (4) eingesetzt werden.

5. Verfahren nach Anspruch 4, **dadurch gekennzeichnet**, daß die hochauflösende Zeilenkamera (11) das von der Oberfläche der einzelnen Formlinge (4) stammende Oberflächensignal in die Signale R (Rot), G (Grün) und B (Blau) zur Bestimmung des Farbwertes und in ein Signal Y (Luminanz) zur Bestimmung des Helligkeitswertes aufspaltet.

6. Verfahren nach den Ansprüchen 2 und 5, **dadurch gekennzeichnet**, daß parallel zu der Höhen- und Farbmessung die hochauflösende Zeilenkamera (11) zur Erkennung der Oberflächen der in einer Charge (8) befindlichen Formlinge (4) eingesetzt wird.

7. Verfahren nach einem der vorhergehenden Ansprüche 1 bis 6, **dadurch gekennzeichnet**, daß sämtliche einzeln gemessenen Werte einer Charge (8) wie Höhenmessung der Palette (3), der einzelnen Formlinge (4), sowie die Farbwerte, die Helligkeitswerte und die Oberflächenwerte einem Computer (12) zugeführt werden und diese Momentanwerte mit vorgegebenen abgespeicherten Sollwerten (17) verglichen werden.

8. Verfahren nach Anspruch 7, **dadurch gekennzeichnet**, daß bei Überschreitung der im Computer (12) abgespeicherten für die Qualität einer Charge (8) bestimmenden Sollwerte, die Vorrichtung sofort abgeschaltet wird, um die noch nicht abgebundene Charge (8) von der Fördereinrichtung (5) zu entfernen, und sie wieder der Formvorrichtung (2) zugeführt wird.

9. Verfahren nach einem oder mehreren der Ansprüche 1 bis 8, **dadurch gekennzeichnet**, daß mit der Meßanordnung (7) die Meßwerte quer zur Förderrichtung aufgenommen werden, wobei jeweils die in einer Charge (8) hintereinander liegenden Formlinge (4) beim Durchlaufen der Meßanordnung (7) gemessen werden.

10. Verfahren nach Anspruch 9, **dadurch gekennzeichnet**, daß von den einzelnen Messwerten (16) einer Charge (8) ein Mittelwert (17) gebildet wird, der mit einem vorgegebenen abgespeicherten Sollwert verglichen wird.

11. Verfahren nach Anspruch 10, **dadurch gekennzeichnet**, daß bei der Festlegung des Sollwertes Toleranzgrenzen von plus/minus 5 % zugelassen werden.

12. Vorrichtung zur Durchführung des Verfahrens nach einem der Ansprüchen 1 bis 11 zur Qualitätssicherung bzw. zur Qualitätsüberwachung von geformten Bauelementen wie Formsteinen, Betonsteinen, Pflastersteinen, Ziegeln, Platten oder dgl., die in einer Formvorrichtung (2) kontinuierlich herstellbar sind, und chargenweise mittels einer Fördereinrichtung (5) zum Abbinden in ein Lager abgefördert werden, wobei der Formvorrichtung (2) unmittelbar eine Meßanordnung (7) nachgeschaltet ist, die Höhenmessungen an in einer Charge befindlichen einzelnen Formlingen (4) durchfürt, **dadurch gekennzeichnet**, daß die Meßanordnung (7) aus mindestens zwei Laserdioden (9, 10) und einer hochauflösenden Zeilenkamera (11) besteht, die an einem Gestell (18) über der Fördereinrichtung (5) angeordnet ist.

13. Vorrichtung nach Anspruch 12, **dadurch gekennzeichnet**, daß mit der Zeilenkamera (11) neben der Höhenmessung auch die Farbe der Formlinge (4) nach dem Verfahren messbar ist.

14. Vorrichtung nach Anspruch 13, **dadurch gekennzeichnet**, daß die Zeilenkamera (11) und die Laserdioden (9, 10) an dem Gestell (18) horizontal in unterschiedliche Positionen verschiebbar angeordnet sind.

15. Vorrichtung nach Anspruch 14, **dadurch gekennzeichnet**, daß zur Feinjustierung der unterschiedlichen Positionierungen die Laserdioden (9, 10) und die Zeilenkamera (11) auf Schlitten (20, 20.1 und 20.2 ) angeordnet sind, die mittels eines Spindeltriebs (21) an einem horizontal verlaufenden Balken (22) des Gestells (18) verschiebbar angeordnet sind.

16. Vorrichtung nach den Ansprüchen 12 bis 15, **dadurch gekennzeichnet**, daß die Laserdioden (9, 10) und die Zeilenkamera (11) in einer Ebene quer zur Förderrichtung angeordnet sind, und wobei die einzelnen Laserdioden (9) und (10) unter einem Winkel (23) quer zur Förderrichtung angeordnet sind, so daß die Laserstrahlen (24) entsprechend ihrer Winkeleinstellung auf die zu messenden Formlinge (3, 4) auftreffen.

17. Vorrichtung nach Anspruch 16**, dadurch gekennzeichnet**, daß ein Laserstrahl (24) auf die Palette (3) und der zweite Laserstrahl (24a) auf die aufliegenden Formlinge (4) gerichtet sind.

18. Vorrichtung nach einem oder mehreren der vorhergehenden Ansprüche 12 bis 17, **dadurch gekennzeichnet**, daß die Meßanordnung (7) mit einem Computer (12) zur Auswertung der momentan durch die Meßanordnung (7) aufgenommenen Meßwerte verbunden ist.

## Claims

1. Process for assuring or monitoring the quality of formed building units such as purpose-made bricks, concrete blocks, paving stones, bricks, slabs or the like, which are manufactured in a continuous process in a moulding device (2), conveyed away in batches on a conveyor (5) for the purpose of curing in a place of storage, there being arranged directly downstream of the moulding device a measuring arrangement (7), which carries out measurements on individual freshly made products (4), whereby the freshly made products (4), which are above or below a specified set value, are sorted out as soon as they have passed through the measuring arrangement and returned again to the moulding device (2), and whereby the measuring arrangement (7) can be used to regulate the moulding device (2), characterised in that, with the measuring arrangement (7), and in addition to the height measurement, a colour measurement is carried out on individual freshly made products (4) in a batch (8), a high-resolution linear-array camera (11) measuring the surfaces of the individual freshly made products (4) of a batch (8) for their hue and brightness.

2. Process as claimed in Claim 1, characterised in that with the measuring arrangement (7), the height of the freshly made products (4) is measured with at least two installed laser diodes (9) and (10) in conjunction with a high-resolution linear array camera (11).

3. Process as claimed in Claims 1 and 2, characterised in that the height of the pallet (3) carrying the batch (8) is measured by the laser diode (9) and the heights of the individual freshly made products (4) are determined by the laser diode (10), so that the height of the freshly made product is determined from the resultant difference between the measured heights of the pallet (3) and the freshly made product (4).

4. Process as claimed in Claims 2 and 3, characterised in that, in addition to the laser diodes (9) and (10), further lasers can be installed, which are used either for height measurements or for checking the moulded contours of the freshly made product (4).

5. Process as claimed in Claim 4, characterised in that the high-resolution linear array camera (11) splits the surface signal from the surface of the individual freshly made products (4) into the signals R (red), G (green) and B (blue), in order to determine the hue, and into a signal Y (luminance) to determine the brightness value.

6. Process as claimed in Claims 2 and 5, characterised in that, in parallel with the height and colour measurement, the high-resolution linear-array camera (11) is used to identify the surfaces of the freshly made products (4) in a batch (8).

7. Process as claimed in any one of the preceding Claims 1 to 6, characterised in that all of the individually measured values of a batch (8), such as the height measurement of the pallet (3), of the individual freshly made products (4), the hue and brightness values and the surface values are fed into a computer (12) and the said actual values compared with stored and specified set values (17).

8. Process as claimed in Claim 7, characterised in that, if the determining set values stored in the computer regarding the quality of a batch (8) are exceeded, the apparatus is switched off immediately in order to remove from the conveyor (5) the as yet uncured batch (8), and returned to the moulding device (2).

9. Process as claimed in any one or several of Claims 1 to 8, characterised in that with the measuring arrangement (7), the measurement values are recorded transverse to the direction of conveyance, each of the freshly made products (4), placed one behind the other in a batch (4), being measured as it passes through the measuring arrangement.

10. Process as claimed in Claim 9, characterised in that a mean value is formed from the individual measured values (16) in a batch (8) and compared with a specified and stored set value.

11. Process as claimed in Claim 10, characterised in that in determining the set value, tolerance limits of plus/minus 5% are accepted.

12. Apparatus for implementing the process as claimed in any of Claims 1 to 11 for assuring or monitoring the quality of formed building units such as purpose-made bricks, concrete blocks, paving stones, bricks, slabs or the like, which can be manufactured in a continuous process in a moulding device (2), conveyed away in batches on a conveyor (5) for the purpose of curing in a place of storage, there being arranged directly downstream of the moulding device (2) a measuring arrangement (7), which carries out height measurements on individual freshly made products (4), characterised in that the measuring arrangement (7) comprises at least two laser diodes (9, 10) and a high-resolution linear array camera (11) arranged on a frame (18) above the conveyor (5).

13. Apparatus as claimed in Claim 12, characterised in that, with the line-array camera and in addition to the height of the freshly made products (4), their colour may also be measured in accordance with the process.

14. Apparatus as claimed in Claim 13, characterised in that the linear-array camera (11) and the laser diodes (9, 10) are horizontally arranged on the frame (18), such that they can be moved into different positions.

15. Apparatus as claimed in claim 14, characterised in that, in order to carry out fine adjustments to the different positions, the laser diodes (9,10) and the line-array camera (11) are arranged on slides (20, 20.1 and 20.2) which, with the assistance of a spindle drive mechanism (21), are arranged in a manner which allows them to be moved on a horizontal beam (22) of the frame (18).

16. Apparatus as claimed in Claims 12 to 15, characterised in that the laser diodes (9, 10) and the linear-array camera (11) are arranged in a plane transverse to the direction of conveyance, the individual laser diodes (9) and (10) being arranged at an angle (23) transverse to the direction of conveyance, so that the laser beams (24) fall onto the freshly made products (3, 4) to be measured in accordance with their angular setting.

17. Apparatus as claimed in Claim 16, characterised in that one laser beam (24) is directed onto the pallet (3) and that the second laser beam (24a) is directed onto the freshly made products (4) lying thereon.

18. Apparatus as claimed in any one or several of the preceding Claims 12 to 17, characterised in that the measuring arrangement (7) is linked to a computer (12) to evaluate the measured values as they are recorded by the measuring arrangement (7).

## Revendications

1. Procédé pour garantir ou contrôler la qualité de composants moulés tels que des briques moulées, des blocs de béton, des dalles, des tuiles, des plaques ou analogues, qui sont fabriqués de façon continue dans un dispositif de moulage (2) et sont évacués par lots au moyen d'un dispositif de convoyage (5) pour être assemblés selon une couche, dans lequel en aval du dispositif de moulage est branché directement un dispositif de mesure (7), qui exécute des mesures sur les briquettes individuelles (4) situées dans un lot, selon lequel les briquettes (4), qui dépassent par le haut ou par le bas une valeur de consigne prédéterminée, sont extraites par triage directement après avoir traversé le dispositif de mesure et sont renvoyées au dispositif de moulage (2), et le dispositif de mesure (7) peut être utilisé pour régler le dispositif de moulage (2), caractérisé en ce qu'avec le dispositif de mesure (7) on exécuté, en plus d'une mesure de hauteur, une mesure de couleur sur des briquettes individuelles (4) situées dans une charge (8), auquel cas pour la mesure de la couleur, une caméra d'enregistrement ligne par ligne à haute résolution (11) mesure les surfaces des différentes briquettes (4) d'une charge (8) en fonction de leur valeur de couleur et de leur luminosité.

2. Procédé selon la revendication 1, caractérisé en ce qu'avec le dispositif de mesure (7) la mesure de hauteur des briquettes (4) est réalisée à l'aide d'au moins deux diodes laser installées (9) et (10) en liaison avec une caméra d'enregistrement ligne par ligne à haute résolution (11).

3. Procédé selon l'une des revendications 1 et 2, caractérisé en ce que la hauteur de la palette (3), sur laquelle est située la charge (8), est mesurée à l'aide de la diode laser (9), et les hauteurs des différentes briquettes (4) sont déterminées à l'aide de la diode laser (10) de sorte que la hauteur de la briquette est déterminée au moyen de la différence, que l'on obtient, entre les mesures de hauteur de la palette (3) et de la briquette (4).

4. Procédé selon les revendications 2 et 3, caractérisé en ce qu'en plus des diodes laser (9) et (10) on peut installer des lasers supplémentaires, qui sont utilisés soit pour la mesure de hauteur, soit pour le contrôle des contours de la briquette (4).

5. Procédé selon la revendication 4, caractérisé en ce que la caméra d'enregistrement ligne par ligne à haute résolution (11) décompose le signal de surface, qui provient de la surface des différentes briquettes (4), en les signaux R (rouge), G (vert) et a (bleu) pour la détermination de la valeur de couleur et en un signal Y (luminance) pour la détermination de la valeur de luminosité.

6. Procédé selon les revendications 2 et 5, caractérisé en ce que parallèlement à la mesure de hauteur et de couleur, la caméra d'enregistrement ligne par ligne à haute résolution (11) est utilisée pour identifier les surfaces des briquettes (4) situées dans une charge (8).

7. Procédé selon l'une des revendications précédentes 1 à 6, caractérisé en ce que toutes les valeurs mesurées Individuellement d'une charge (8) comme la mesure de hauteur de la palette (3), des différentes briquettes (4), ainsi que les valeurs de couleur, les valeurs de luminosité, les valeurs de surface sont envoyées à un ordinateur (12) et que ces valeurs instantanées sont comparées à des valeurs de consigne prédéterminées mémorisées (17).

8. Procédé selon la revendication 7, caractérisé en ce que dans le cas où des valeurs de consigne, qui sont mémorisées dans l'ordinateur (12) et sont déterminantes pour la qualité d'une charge (8), sont dépassées par des valeurs supérieures, le dispositif est immédiatement arrêté de manière à retirer du dispositif de convoyage (5) la charge (8) non encore assemblée et que cette charge est à nouveau envoyée au dispositif de moulage (2).

9. Procédé selon une ou plusieurs des revendications 1 à 8, caractérisé en ce qu'à l'aide du dispositif de mesure (7) on enregistre les valeurs de mesure transversalement par rapport à la direction de convoyage, les briquettes (4) situées les unes derrière les autres dans une charge (8) étant respectivement mesurées lorsqu' elles traversent le dispositif de mesure (7).

10. Procédé selon la revendication 9, caractérisé en ce qu'une valeur moyenne (17) des différentes valeurs de mesure (7) d'une charge (8) est formée, cette valeur moyenne étant comparée à une valeur de consigne prédéterminée mémorisée.

11. Procédé selon la revendication 10, caractérisé en ce que dans la détermination de la valeur de consigne, des limites de tolérance de plus/moins 5 % sont autorisées.

12. Dispositif pour la mise en oeuvre du procédé selon l'une des revendications 1 à 11, pour garantir ou contrôler la qualité de composants moulés tels que des briques moulées, des blocs de béton, des dalles, des tuiles, des plaques ou analogues, qui sont fabriqués de façon continue dans un dispositif de moulage (2) et sont évacués par lots au moyen d'un dispositif de convoyage (5) pour être assemblés selon une couche, dans lequel en aval du dispositif de moulage est branché directement un dispositif de mesure (7), qui exécute des mesures sur les briquettes individuelles (4) situées dans un lot, caractérisé en ce que le dispositif de mesure (7) se compose d'au moins deux diodes laser (9, 10) et d'une caméra d'enregistrement ligne par ligne à haute résolution (11), qui est disposée sur un châssis (18) audessus du dispositif de convoyage (5).

13. Dispositif selon la revendication 12, caractérisé en ce que la mesure de la couleur des briquettes (4) est également réalisée, après la mise en oeuvre du procédé, à l'aide de la caméra d'enregistrement ligne par ligne (11), en plus de la mesure de hauteur.

14. Dispositif selon la revendication 13, caractérisé en ce que la caméra d'enregistrement ligne par ligne (11) et les diodes laser (9, 10) sont disposées sur le châssis (18) de manière à être déplaçables horizontalement dans différentes positions.

15. Dispositif selon la revendication 14, caractérisé en ce que pour le réglage précis des différents positionnements, les diodes laser (9, 10) et la caméra d'enregistrement ligne par ligne (11) sont disposées sur des chariots (20, 20.1 et 20.2), qui sont disposés de manière à être déplaçables, au moyen d'un dispositif d'entraînement à broche (21), sur une poutre horizontale (22) du châssis (18).

16. Dispositif selon les revendications 12 à 15, caractérisé en ce que les diodes laser (9, 10) et la caméra d'enregistrement ligne par ligne (11) sont disposées dans un plan transversal par rapport à la direction de convoyage, les différentes diodes laser (9) et (10) étant disposées sous un angle (23) transversalement par rapport à la direction de convoyage de telle sorte que les faisceaux laser (24) rencontrent les briquettes (3, 4) à mesurer, conformément à leur réglage angulaire.

17. Dispositif selon la revendication 16, caractérisé en ce qu'un faisceau laser (24) est dirigé sur la palette (3) et que le second faisceau laser (24a) est dirigé sur les briquettes (4) situées sur la palette.

18. Dispositif selon une ou plusieurs des revendications précédentes 12 à 17, caractérisé en ce que le dispositif de mesure (7) est relié à un ordinateur (12) pour l'évaluation des valeurs de mesure enregistrées instantanément par le dispositif de mesure (7).
